# FASCICULE DE BREVET EUROPEEN

(11) **EP 0 654 375 B1**
(45) Date de publication et mention de la délivrance du brevet: **09.09.1998**
(21) Numéro de dépôt: 94402683.0
(22) Date de dépôt: 23.11.1994
(51) Int. Cl.: B60Q 1/076

(54) **Projecteur de véhicule notamment automobile**
Scheinwerfer für Kraftfahrzeuge
Vehicle headlamp

(30) Priorité: 23.11.1993 FR 9313985
(43) Date de publication de la demande: 24.05.1995
(73) Titulaire: VALEO VISION, 93000 Bobigny (FR)
(72) Inventeur: Castagnede, Stéphane, F-92300 Levallois (FR)
(74) Mandataire: Martin, Jean-Jacques

(56) Documents cités:
- WO-A-90/07440
- DE-C- 4 108 211
- FR-A- 2 468 115

## Description

La présente invention se rapporte au domaine de l'équipement des véhicules. Elle concerne plus particulièrement un projecteur de véhicule notamment automobile.

Il est bien connu d'équiper les projecteurs d'un véhicule automobile d'un dispositif correcteur d'inclinaison des réflecteurs, dont la fonction est de permettre une modification de l'orientation des réflecteurs, notamment de haut en bas, afin notamment de compenser les variations de la charge.

L'invention concerne plus précisément un projecteur comportant un correcteur à commande électrique, de type connu en soi. Généralement un correcteur électrique est un dispositif pourvu d'un petit moteur électrique apte à déplacer en translation une tige filetée dont l'extrémité libre porte une rotule qui se loge dans une coupelle solidaire du réflecteur. Le réflecteur est articulé, et le déplacement de la tige permet de faire pivoter légèrement le réflecteur autour de son axe d'articulation afin d'en modifier l'orientation spatiale.

Traditionnellement, le correcteur est monté à l'extérieur du boîtier de projecteur et est branché à un connecteur distinct, indépendant des connecteurs qui alimentent la ou les lampes qui se trouve(nt) à l'intérieur du boîtier.

Du fait de son installation à l'extérieur du boîtier de projecteur, le correcteur constitue un élément qui d'une part occupe une place non négligeable, et d'autre part est exposé au milieu extérieur, en particulier à l'humidité, aux poussières, aux projections de liquide, etc.

Par ailleurs, le montage et le branchement électrique du correcteur sont des opérations qui sont faites indépendamment de l'opération de branchement des lampes, si bien que le temps global nécessaire au montage est relativement élevé.

On connaît également par FR-A-2 468 115, FR-A-2 468 115 et DE-A-41 08 211 des projecteurs dans lesquels on a tenté de simplifier la connexion du correcteur et des lampes.

On connaît enfin par le document W0-A-90 07440 un projecteur selon le préambule de la revendication 1.

Ce projecteur nécessite toutefois un connecteur et un câblage spécifiques pour le correcteur, ainsi que des moyens de connexion et de câblage spécifiques pour la ou les lampes.

Il en résulte des temps de montage et de câblage élevés.

L'invention a pour objectif de proposer un projecteur qui permette à la fois des branchements électriques simples et rapides du correcteur et des lampes, et un montage simple et rapide du correcteur.

Ces différents résultats sont atteints avec un projecteur tel que défini dans la revendication 1.

Des aspects préférés sont définis dans les sous-revendications.

D'autres caractéristiques et avantages de l'invention apparaîtront de la description et des dessins annexés qui en représentent un mode de réalisation préférentiel.

Sur ces dessins:
- la figure 1 est une vue d'un projecteur conforme à l'invention, pourvu de deux réflecteurs, et coupé par un plan transversal passant par l'axe des deux réflecteurs;
- la figure 2 représente un détail de la figure 1 coupé par le plan II-II.

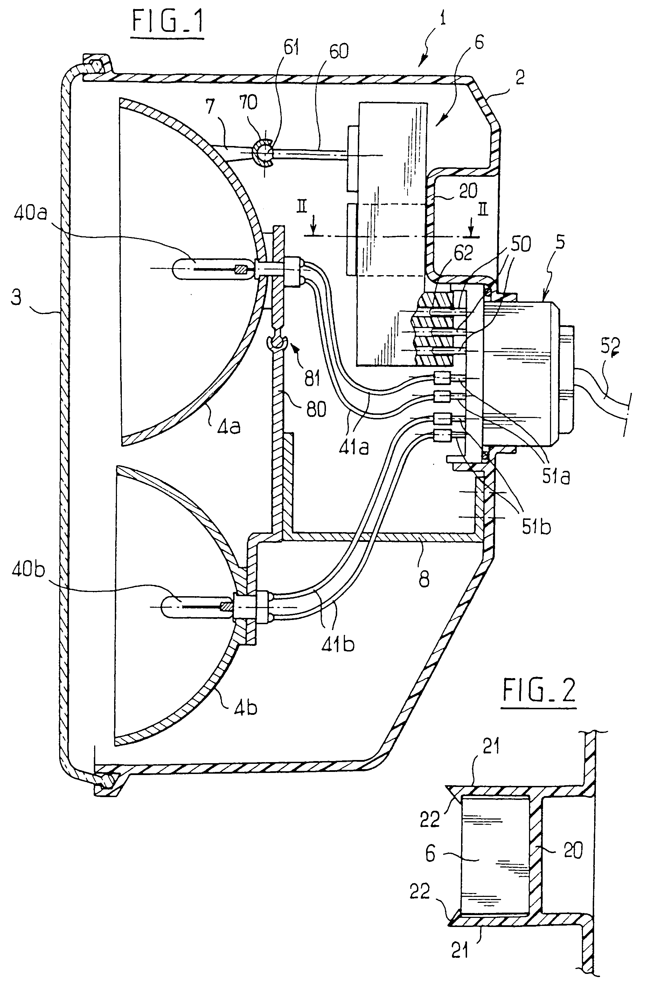

Le projecteur 1 représenté à la figure 1 comprend un boîtier 2 à l'intérieur duquel sont montés deux réflecteurs 4a et 4b, ce boîtier étant fermé, de manière usuelle, par un couvercle en matière transparente 3 ayant des propriétés optiques appropriées, couramment appelé glace.

L'un 4b des deux réflecteurs pourrait consister en un simple dispositif de signalisation.

La glace 3 est convenablement fixée au boîtier 2, par exemple par clipsage et/ou à l'aide de vis.

Des organes de support appropriés 8, 80 assurent la fixation et la retenue des deux réflecteurs 4a, 4b dans leur position correcte à l'intérieur du boîtier.

On a désigné par les références 40a et 40b les sources lumineuses (lampes électriques) des réflecteurs 4a, respectivement 4b. Ces lampes sont alimentées chacune par une paire de câbles 41a, respectivement 41b.

Ce projecteur est équipé d'un dispositif électrique correcteur 6 qui permet de modifier l'orientation de l'un des deux réflecteurs, en l'occurrence du réflecteur 4a.

Si on suppose que le plan de coupe de la figure 1 est un plan vertical, les réflecteurs 4a et 4b sont superposés, et le correcteur 6 est adapté pour modifier l'inclinaison du réflecteur 4a en direction verticale (de haut en bas ou de bas en haut).

Ce réglage se fait par déplacement d'une tige 60 dont l'extrémité libre porte une tête hémisphérique ou rotule 61. Celle-ci s'engage dans une pièce complémentaire concave 70 (petite cuvette) **solidaire** d'une pièce de montage 7 fixée à l'arrière et sur le dessus du réflecteur 4a.

Le réflecteur 4a est monté sur son support 80 avec possibilité d'articulation, d'amplitude limitée. Cette articulation est matérialisée par exemple par un montage à rotule globalement désigné par la référence 81.

Le correcteur 6 contient un petit moteur électrique, non représenté, dont la rotation dans un sens ou dans l'autre a pour effet de provoquer le déplacement axial en translation, dans un sens ou dans l'autre, de la tige 60. Ce mouvement est transmis au réflecteur 4a, et l'orientation de ce dernier se trouve par conséquent modifiée.

Selon une caractéristique essentielle de la présente invention, le projecteur comporte un connecteur électrique unique 5. Celui-ci est monté et fixé dans une ouverture de la paroi arrière du boîtier 2. Il comporte un certain nombre de broches (fiches mâles) de branchement 50, 51 qui font saillie à l'intérieur du boîtier, l'ensemble des broches étant alimenté par des fils électriques regroupés en un câble de connexion 52, ceci de manière usuelle.

Le câble 52 est relié à la batterie du véhicule et à la masse, via les circuits de commande du projecteur et du correcteur.

Les broches 50, au nombre de trois, sont destinées à l'alimentation du correcteur 6, tandis que deux broches 51a sont destinées à l'alimentation de la lampe 40a et deux broches 51b à l'alimentation de la lampe 40b.

Dans la partie inférieure du correcteur 6 sont logées trois fiches femelles 62 aptes à s'enficher dans les broches 50. Elles sont reliées au moteur électrique pour provoquer l'arrêt de celui-ci, ou son activation dans un sens ou dans l'autre, selon la configuration de leur alimentation électrique. Le correcteur 6 vient en appui contre un renfoncement 20 de la paroi arrière du boîtier. Il est retenu par deux pattes 21 flexibles élastiquement, qui forment parties intégrantes de la paroi du boîtier et qui possèdent des chanfreins d'entrée 22 permettant l'encliquetage du correcteur 6 entre les pattes 21.

La mise en place du correcteur 6 se fait donc d'avant vers l'arrière, par encliquetage entre les pattes 21 et enfichage des fiches femelles sur les fiches mâles 50 du connecteur.

On constate donc qu'un connecteur unique 5 permet d'alimenter à la fois le correcteur électrique 6 et les deux lampes 40a et 40b.

Le correcteur 6 se trouvant à l'intérieur du boîtier, il est à l'abri du milieu extérieur, et se trouve donc protégé de l'humidité, de la poussière, etc.

Il va de soi que l'invention est également applicable à des projecteurs à un seul réflecteur ou à plus de deux réflecteurs.

## Revendications

1. Projecteur (1) de véhicule notamment automobile, du type comprenant un boîtier (2) abritant au moins un réflecteur (4a) dans lequel est montée une source lumineuse (40a), et un dispositif correcteur électrique (6) pour faire varier l'orientation du réflecteur (4a), des moyens de connexion étant prévus pour l'alimentation de la source (40a) et du correcteur (6), caractérisé en ce que les moyens de connexion comprennent un connecteur unique (5) auquel sont reliés à la fois ladite source (40a) et ledit correcteur (6) et dans lequel ledit correcteur (6) est enfiché directement.

2. Projecteur selon la revendication 1, caractérisé en ce que ledit correcteur (6) est logé à l'intérieur du boîtier.

3. Projecteur selon la revendication 2, caractérisé en ce que le correcteur est monté dans le boîtier par encliquetage.

4. Projecteur selon l'une des revendications 1 à 3, caractérisé en ce que ledit boîtier reçoit au moins deux réflecteurs (4a, 4b) et deux sources lumineuses (40a, 40b) reliées audit connecteur unique.

## Claims

1. Headlight (1) for a vehicle, in particular a motor car, of the type comprising a casing (2) enclosing at least one reflector (4a) in which a light source (40a) is mounted, and an electrical correcting device (6) for varying the orientation of the reflector (4a), connection means being provided for the power supply for the source (40a) and corrector (6), characterised in that the connection means comprise a single connector (5) to which the said source (40a) and the said corrector (6) are both connected and into which the corrector (6) is directly plugged.

2. Headlight according to Claim 1, characterised in that the said corrector (6) is housed inside the casing.

3. Headlight according to Claim 2, characterised in that the corrector is mounted in the casing by snapping in.

4. Headlight according to one of Claims 1 to 3, characterised in that the said casing is fitted with at least two reflectors (4a, 4b) and two light sources (40a, 40b) connected to the said single connector.

## Patentansprüche

1. Fahrzeugscheinwerfer (1), insbesondere für Kraftfahrzeuge, umfassend ein Gehäuse (2), das mindestens einen Reflektor (4a) enthält und in dem eine Lichtquelle (40a) eingebaut ist, und eine elektrische Korrektureinrichtung (6), um die Ausrichtung des Reflektors (4a) zu verändern, wobei Anschlußmittel für die Stromversorgung der Lichtquelle (40a) und der Korrektureinrichtung (6) vorgesehen sind , **dadurch gekennzeichnet**, daß die Anschlußmittel einen einzigen Verbinder (5) umfassen, mit dem sowohl die besagte Lichtquelle (40a) als auch die besagte Korrektureinrichtung (6) verbunden sind und in den die besagte Korrektureinrichtung (6) direkt eingesteckt ist.

2. Scheinwerfer nach Anspruch 1, **dadurch gekennzeichnet**, daß die besagte Korrektureinrichtung (6) im Innern des Gehäuses angeordnet ist.

3. Scheinwerfer nach Anspruch 2, **dadurch gekennzeichnet**, daß die Korrektureinrichtung im Gehäuse durch Verrastung eingesetzt ist.

4. Scheinwerfer nach einem der Ansprüche 1 bis 3, **dadurch gekennzeichnet**, daß das besagte Gehäuse mindestens zwei Reflektoren (4a, 4b) und zwei Lichtquellen (40a, 40b) aufnimmt, die mit dem besagten einzigen Verbinder verbunden sind.
